# EUROPEAN PATENT SPECIFICATION

(11) **EP 0 350 472 B1**
(45) Date of publication and mention of the grant of the patent: **08.09.1993**
(21) Application number: 89850226.5
(22) Date of filing: 06.07.1989
(51) Int. Cl.: B01F 15/00, F16C 35/06

(54) **Device in shaft bearings**
Schaftlagervorrichtung
Dispositif de roulement pour arbre

(30) Priority: 07.07.1988 SE 8802548
(43) Date of publication of application: 10.01.1990
(73) Proprietor: SCABA AB, S-183 02 Täby (SE)
(72) Inventor: Skanberg, Borje, S-183 38 Täby (SE); Hjorth, Sven, S-183 38 Täby (SE)
(74) Representative: Henningsson, Gunnar

(56) References cited:
- FR-A- 2 099 152
- US-A- 2 536 348
- US-A- 3 606 260

## Description

### TECHNICAL FIELD

The present invention relates to a shaft with a device for journaling the shaft associated with a top-mounted agitator or stirrer, the device including a bearing provided between the shaft and the bearing housing. In this context top mounting signifies, that the drive unit, including gearbox, is mounted above the generally vertical shaft.

### BACKGROUND ART

Top-mounted agitators often have long vertical shafts, and due to gravitational and hydrodynamic forces the shafts are subjected to large moments and axial forces. It is normally not possible to connect such a shaft directly to an overhead, standard gearbox, since the large bending moments disturb the positions of the gears of the gear box and since the gearbox bearings most often do not stand up to the stresses that occur. To solve this problem it has been necessary to over-dimension the gearbox, to manufacture special gearboxes or to provide the agitator with an extra bearing which takes up the large forces. The latter alternative is the most usual solution in Europe, while in the USA specially manufactured gearboxes are most often used. An extra bearing involves extra costs and problems with fitting and maintenance.

From the aspect of transporting it, an agitator should be supplied with a loose shaft, which can easily be fitted when the agitator is set up. This is easily managed if one utilizes special gearboxes or over-dimensioned gearboxes with hollow shafts, in which the agitator shaft can be inserted. Standard gearboxes of the last-mentioned type are of limited use, however, with respect to the available r.p.m. Therefore, when an insertable shaft cannot be used, the agitator drive unit is often provided with a short projecting drive shaft, to which the agitator shaft is connected via a flange or other shaft coupling. This is very often an expensive method, since the coupling must often be made in corrosion resistant special steel. It is thus desirable to be able to arrange for an insertable shaft to be used in combination with standard gearboxes, without this resulting in high costs for special shaft journaling.

It is often also desirable that the drive unit gearbox as well as bearings and also shaft seals, where applicable, can be replaced with the agitator shaft still in place without the associated tank or receptacle needing to be emptied, and this involves design problems.

All the above mentioned demands on the shaft bearing should be met, irrespective of whether the agitator shaft is plain or covered by a protective sheet for resisting a corrosive environment.

From the strength of materials aspect, the shaft should not be machined below the shaft bearing, since this leads to stress concentrations which can cause the shaft to break. This means further restrictions.

US-A-3 606 260 discloses an agitator mechanical seal cartridge assembly which may be easily removed and replaced as a unit. A driving shaft is coupled to a driven shaft in the cartridge assembly which includes bearing means and which is secured to the vessel into which the driven shaft extends downwardly. The upper end of the driven shaft is provided with a collar for cooperation with a supporting ring secured to the vessel, for maintaining the driven shaft in position during a cartridge removal and replacement operation.

### OBJECT OF THE INVENTION

The object of the present invention is to provide a shaft with an improved shaft bearing device, whereby several of the problems connected with previously used devices have been obviated to a substantial degree.

### SUMMARY OF THE INVENTION

The above-mentioned object is achieved in accordance with the invention by the characterizing features disclosed in the following claims.

In accordance with the invention the bearing is mounted on a shaft sleeve fastened to the shaft, said sleeve being formed such that the bearing can be removed therefrom when dismantled by moving the bearing upwards along the sleeve. The sleeve is provided below the bearing with abutment means The sleeve is provided below the bearing with abutment means arranged for co-action with complementary abutment means in the bearing housing, so that the shaft sleeve, and thereby the shaft, can be carried in the bearing housing when the bearing is removed from the shaft sleeve, or in connection with a bearing failure which could allow the shaft to fall down.

In a preferred embodiment of the device, the shaft sleeve engages downwardly against a collar abutment on the shaft, preferably via an annular seal such as an O-ring, the sleeve upwardly being removably clamped in place with the aid of locking means, preferably a ring nut co-acting with a threaded part of the shaft.

The collar abutment advantageously consists of a ring shrunk on to the shaft, or the upper definition of a shaft covering, which of course can be such a ring, per se.

The shaft sleeve is advantageously provided with an annular flange, the upper surface of which constitutes the support surface for the bearing mounting, and the lower surface of which constitutes the above-mentioned abutment means on the shaft sleeve, the bearing suitably being retained on the shaft sleeve, by means of an upper circlip situated in a complementary groove in the cylindrical surface of the shaft sleeve.

The lower end of the shaft sleeve can project down through the bottom of the bearing housing, sealing means being arranged therebetween. The above-mentioned abutment means in the bearing housing may consist of the bottom surface of the housing, surrounding the bottom opening, through which the shaft and said lower end of the shaft sleeve pass.

The bearing device has been found to be structurally simple and comparatively cheap, while also providing excellent, stable journaling. It is easy to fit and dismantle and secures the shaft against undesired downward movement in an extremely simple and effective way.

The invention will now be described in more detail with the aid of an embodiment example and with reference to the accompanying drawings.

### SHORT DESCRIPTION OF DRAWINGS

Figure 1 is a schematic side view, partially in an axial section, of an embodiment of the invention.

Figure 2 is a partial view to a larger scale of the device in Figure 1.

### DESCRIPTION OF EMBODIMENT

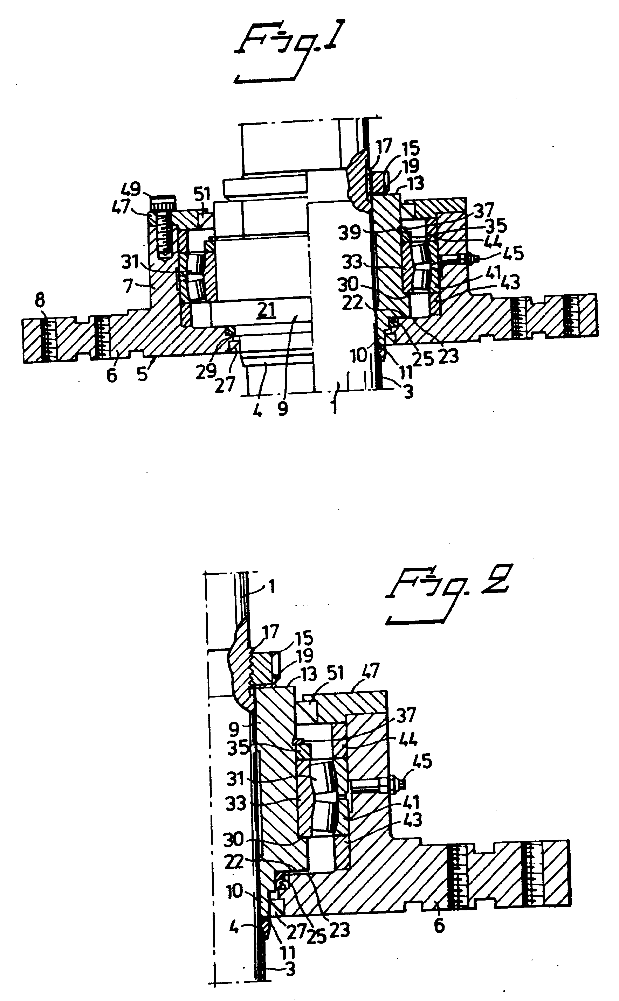

The bearing device illustrated in Figures 1 and 2 comprises a lower bearing for a vertical shaft 1 for a top-mounted agitator. The shaft 1 is downwardly, i.e. below the bearing, provided with a protective covering 3, which upwardly has terminating collar 4 fastened to the shaft. The unillustrated upper part of the shaft 1 is formed as an insertion shaft and may optionally pass through an upper, conventional bearing.

The bearing device includes a bearing housing 5, comprising an annular horizontal bottom plate 6 integral with a cylindrical, tubular part 7, projecting upwards from the plate 6, the vertical axis of the tubular part being co-axial with shaft 1. The shaft passes through the central circular opening in the bottom plate 6, which is provided with threaded holes 8 for screws fastening the plate to an agitator stand.

A shaft sleeve 9 is disposed on the shaft 1. The inside diameter of the sleeve is substantially adapted to the outside diameter of the shaft 1, at least at the respective ends of the sleeve. The lower end portion 10 of the sleeve has a reduced outside diameter and extends down through the opening of the bottom plate and to a collar 4 against which the end portion 10 engages via an O-ring 11.

The upper end portion of the sleeve 9 has a horizontal abutment surface 13 intended for co-action with a locking nut 15 which is threaded on to a threaded part 17 of the shaft 1. The shaft has its diameter somewhat reduced above the threaded part 17, the outside diameter of which is such that the sleeve 9 can pass over it. The nut 15 is secured in its tightened-down position with the aid of a tab washer 19.

It will be understood that the sleeve 9 can easily be applied to the shaft and located in a well defined position with sealing at the abutment against the collar 4.

The sleeve 9 downwardly has a radially projecting flange 21 above the end portion 10, the lower horizontal surface 22 of this flange constituting an abutment surface intended for co-action with the horizontal, upper abutment surface 23 surrounding the bottom opening of the bottom plate 6. In the normal operating position illustrated in Figures 1 and 2, the abutment surface 22 and 23 have a small mutual spacing.

The seal between the end portion 10 of the sleeve and the wall of the bottom opening is provided by an upper V ring 25 and a lower simmer ring-type seal 27. The two are separated by an annular projection 29 on the wall of the bottom opening.

The upper horizontal surface 30 of the flange 21 constitutes the abutment surface for the lower side of the inner race 33 of the bearing 31. The bearing race 33 engages against the outer cylindrical surface of the sleeve 9. The upper side of the race is located with the aid of a spacer ring 35 and a circlip 37 which is inserted in an annular groove 39 on the cylindrical surface of the shaft sleeve 9. The outer race 41 of the bearing 31 engages against the inner surface of the tubular part 7 and is kept in position with the aid of an upper 44 and a lower spacer ring 43. The bearing is also provided with a lubrication nipple 45 arranged in the tubular wall. The bearing is sufficiently strong to take up all forces occurring in practice. In particular, the bearing can withstand vertical stresses, that is, axial stresses, resulting from the fact that the shaft hangs in the sleeve carried by the bearing.

A bearing housing cover 47 is screwed onto the upper end surface of the tubular part 7 with the aid of screws 49. The cover engages with a downwardly projecting part against the upper spacer ring 44 and seals interiorally against the shaft sleeve 9 with the aid of a simmer ring 51. For inspecting or changing the bearing 31, the (unillustrated) upper end of the shaft 1 is released in a conventional manner. The cover 47 is then removed. With the aid of a crane or other suitable means, gripping the free end of the shaft, the shaft is lifted, the shaft sleeve 9 and bearing 31 then being easily taken up out of the bearing housing 5. The circlip 37 can now be removed, and the bearing removed from the shaft sleeve. The shaft is now lowered again, the shaft sleeve being able to rest on the bottom plate 6 by co-action between the abutment surfaces 22 and 23. The lifting means can now be released and the bearing removed, e.g. for replacement by a new one. To get the new bearing and a new circlip in place, the shaft must be lifted up once again with the aid of the lifting means, the shaft finally being lowered again so that the situation illustrated in Figures 1 and 2 can be achieved.

It will be easily understood that the corresponding procedure can be utilized for changing shaft seals.

The device in accordance with the invention permits a bearing which is difficult to remove from the shaft sleeve, to be easily pushed off. For this purpose, after having lifted up the shaft with shaft sleeve and bearing, a split washer or the like can be inserted between the raised bearing and the bearing housing, after which the shaft is lowered. The bearing will thus be pushed off the shaft sleeve when the latter moves downwards.

It will be understood that the co-acting abutment surfaces 22 and 23 provide security against the shaft 1 falling down uncontrollably, e.g. should there be a bearing failure.

The illustrated assembly of the shaft sleeve means that downwardly directed forces on the shaft are taken up without any problems in the contact between the locking nut 15 and the upper end of the shaft sleeve. Upwardly directed forces on the shaft will never be greater than that they can easily be taken up by the contact between the lower end of the shaft sleeve and the collar 4 via the O-ring 11.

It will be understood that the inventive device means that no machining of the shaft needs to be carried out below the bearing.

## Claims

1. A A shaft (1) of a top-mounted agitator with a device for journaling the shaft, comprising a bearing housing (5) for mounting on an agitator stand or the like, and a bearing (31) mounted between the shaft and the bearing housing, characterized in that the bearing (31) is mounted on a shaft sleeve (9) fastened to the shaft (1), said sleeve being implemented such that when dismantling the bearing it can be removed from the sleeve by movement upwards along the sleeve, said sleeve being provided below the bearing (31) with abutment means having a lower abutment surface (22) arranged for co-action with an upper abutment surface (23) of complementary abutment means in the bearing housing (5) so that the shaft sleeve, and thereby the shaft can be carried in the bearing housing by co-action between said lower and upper abutment surfaces (22,23) when the bearing is removed from the shaft sleeve, or in connection with a bearing failure which could allow the shaft to go down, said abutment surfaces (22,23) having a mutual spacing in the normal operating condition.

2. Assembly as claimed in claim 1, characterized in that the shaft sleeve (9) downwardly engages against a collar abutment (4) on the shaft, preferably via an annular seal (11), such as an O-ring, and upwardly is removably clamped with the aid of locking means (15, 16), preferably a ring nut (15) co-acting with a threaded part (17) on the shaft (1).

3. Assembly as claimed in claim 1 or 2, characterized in that the abutment collar (4) is a collar shrunk on to the shaft.

4. Assembly as claimed in any one of the preceding claims, characterized in that the abutment collar (4) is the upper limitation of a shaft cover (3).

5. Assembly as claimed in any one of the preceding claims, characterized in that the shaft sleeve (9) has an annular flange (21), the upper surface (30) of which is the support surface for the mounting of the bearing and the lower surface (22) of which constitutes said lower abutment surface on the shaft sleeve.

6. Assembly as claimed in any one of the preceding claims, characterized in that the bearing (31) is retained on the shaft sleeve with the aid of an upper circlip (37) situated in a complementary groove (39) on the cylindrical surface of the shaft sleeve (9).

7. Assembly as claimed in any one of the preceding claims, characterized in that the lower end (10) of the shaft sleeve (9) extends down through the bottom (6) of the bearing housing (5), sealing means (25, 27) being arranged therebetween.

8. Assembly as claimed in any one of the preceding claims, characterized in that said upper abutment surface (23) in the bearing housing (5) is the bottom surface of the bearing housing surrounding the bottom opening through which the shaft (1) passes.

## Patentansprüche

1. Welle (1) eines an der Spitze befestigten Rührers mit einer Einrichtung zur Drehlagerung der Welle mit einem Lagergehäuse (5) zur Befestigung auf einem Rührergestell oder dergleichen und einem zwischen der Welle und dem Lagergehäuse angeordneten Lager (31), **dadurch gekennzeichnet**, daß das Lager (31) auf einer Wellenbuchse (9) angeordnet ist, die auf der Welle (1) befestigt ist, wobei die Buchse derart ausgeführt ist, daß beim Auseinandernehmen des Lagers dieses von der Buchse durch Aufwärtsbewegung entlang der Buchse entfernt werden kann, wobei die Buchse unter dem Lager (31) mit einer Widerlagereinrichtung versehen ist, die eine untere Widerlageroberfläche (22) hat, die für ein Zusammenwirken mit einer oberen Widerlageroberfläche (23) einer komplementären Widerlagereinrichtung in dem Lagergehäuse (5) angeordnet ist, so daß die Wellenbuchse und dabei die Welle in dem Lagergehäuse durch Zusammenwirken zwischen der unteren und oberen Widerlageroberfläche (22, 23) getragen werden kann, wenn das Lager aus der Wellenbuchse entfernt wird oder in Verbindung mit einem Lagerdefekt, der die Welle fallenlassen könnte, wobei die Widerlageroberflächen (22, 23) einen wechselseitigen Abstand bei der normalen Betriebsbedingung haben.

2. Anordnung nach Anspruch 1, **dadurch gekennzeichnet**, daß die Wellenbuchse (9) gegen ein Schulterwiderlager (4) auf der Welle nach unten anliegt, vorzugsweise über eine Ringdichtung (11), wie einen O-Ring, und nach oben mit Hilfe einer Verankerungseinrichtung (15, 16), vorzugsweise mit Hilfe einer Ringmutter (15), die mit einem Gewindeteil (17) auf der Welle (1) zusammenwirkt, lösbar eingespannt ist.

3. Anordnung nach Anspruch 1 oder 2, **dadurch gekennzeichnet**, daß die Widerlagerschulter (4) eine auf die Welle geschrumpfte Schulter ist.

4. Anordnung nach einem der vorausgehenden Ansprüche, **dadurch gekennzeichnet**, daß die Widerlagerschulter (4) die obere Begrenzung einer Wellenabdeckung (3) ist.

5. Anordnung nach einem der vorausgehenden Ansprüche, **dadurch gekennzeichnet**, daß die Wellenbuchse (9) einen Ringflansch (21) besitzt, dessen obere Oberfläche (30) die Stützfläche für die Anordnung des Lagers ist und dessen untere Oberfläche (22) die untere Widerlageroberfläche auf der Wellenbuchse bildet.

6. Anordnung nach einem der vorausgehenden Ansprüche, **dadurch gekennzeichnet**, daß das Lager (31) auf der Wellenbuchse mit Hilfe eines oberen Sicherungsbügels (37) gehalten ist, der in einer komplementären Nut (39) auf der zylindrischen Oberfläche der Wellenbuchse (9) angeordnet ist.

7. Anordnung nach einem der vorausgehenden Ansprüche, **dadurch gekennzeichnet**, daß sich das untere Ende (10) der Wellenbuchse (9) abwärts durch den Boden (6) des Lagergehäuses (5) erstreckt, wobei Dichtungseinrichtungen (25, 27) dazwischen angeordnet sind.

8. Anordnung nach einem der vorausgehenden Ansprüche, **dadurch gekennzeichnet**,d aß die obere Widerlageroberfläche (23) in dem Lagergehäuse (5) die Bodenoberfläche des Lagergehäuses ist, die die Bodenöffnung umgibt, durch welche die Welle (1) geht.

## Revendications

1. Un arbre (1) d'un agitateur monté en surplomb, équipé d'un dispositif de tourillonnage de l'arbre, comprenant un logement de palier (5) destiné à être monté sur un support de l'agitateur ou analogue, et un palier (31) monté entre l'arbre et le logement de palier, caractérisé en ce que le palier (31) est monté sur un manchon (9) de l'arbre, fixé à l'arbre (1), ledit manchon étant agencé de telle sorte que, lors du démontage du palier, on peut retirer ce dernier du manchon en le déplaçant selon un mouvement ascendant le long du manchon, ledit manchon étant équipé, au-dessous du palier (31), de moyens de butée possédant une surface inférieure de butée (22) disposée de manière à coopérer avec une surface de butée supérieure (23) de moyens de butée complémentaires situés dans le logement de palier (5) de sorte que le manchon de l'arbre et par conséquent l'arbre peuvent être supportés dans le logement de palier de manière à coopérer entre lesdites surfaces inférieure et supérieure de butée (22,23) lors du retrait du palier à partir du manchon de l'arbre, ou en liaison avec une défaillance du palier qui permettrait une descente de l'arbre, lesdites surfaces de butée (22,23) étant réciproquement distantes dans l'état de fonctionnement normal.

2. Ensemble selon la revendication 1, caractérisé en ce que le manchon (9) de l'arbre s'applique, vers le bas, contre une butée en forme de collet (4) présente sur l'arbre, de préférence, par l'intermédiaire d'un joint d'étanchéité annulaire (11), tel qu'un joint torique, et est serré de façon amovible, à sa partie supérieure, grâce à des moyens de blocage (15,16), de préférence un écrou annulaire (15) coopérant avec une partie filetée (17) présente sur l'arbre (1).

3. Dispositif selon la revendication 1 ou 2, caractérisé en ce que le collet de butée (4) est un collet fretté sur l'arbre.

4. Ensemble selon l'une quelconque des revendications précédentes, caractérisé en ce que le collet de butée (4) forme la limite supérieure d'un capuchon (3) de l'arbre.

5. Ensemble selon l'une quelconque des revendications précédentes, caractérisé en ce que le manchon (9) de l'arbre possède une bride annulaire (21), dont la surface supérieure (30) constitue la surface de support pour le montage du palier et dont la surface inférieure (22) constitue ladite surface inférieure de butée située sur le manchon de l'arbre.

6. Ensemble selon l'une quelconque des revendications précédentes, caractérisé en ce que le palier (31) est maintenu sur le manchon de l'arbre à l'aide d'un circlip supérieur (37) situé dans une gorge complémentaire (39) ménagée dans la surface cylindrique du manchon (9) de l'arbre.

7. Ensemble selon l'une quelconque des revendications précédentes, caractérisé en ce que l'extrémité inférieure (10) du manchon (9) de l'arbre s'étend vers le bas à travers la partie inférieure (6) du logement de palier (5), des moyens d'étanchéité (25,27) étant disposés entre ces parties.

8. Ensemble selon l'une quelconque des revendications précédentes, caractérisé en ce que ladite surface supérieure de butée (23) dans le logement de palier (5) est la surface inférieure du logement de palier entourant l'ouverture inférieure par laquelle passe l'arbre (1).
